# EUROPÄISCHE PATENTSCHRIFT

(11) **EP 0 628 585 B1**
(45) Veröffentlichungstag und Bekanntmachung des Hinweises auf die Patenterteilung: **04.06.1997**
(21) Anmeldenummer: 94810313.0
(22) Anmeldetag: 30.05.1994
(51) Int. Cl.: C08G 59/68, C08G 59/04, C08G 59/06

(54) **Vorverlängerungskatalysatoren enthaltende Epoxidharzgemische**
Advancement catalyst containing epoxy resin compositions
Compositions de résine époxyde contenant un catalyseur d'allongement de chaîne

(30) Priorität: 07.06.1993 CH 1693/93
(43) Veröffentlichungstag der Anmeldung: 14.12.1994
(73) Patentinhaber: Ciba Specialty Chemicals Holding Inc., 4057 Basel (CH)
(72) Erfinder: Hofer, Arnold, Dr., CH-4132 Muttenz (CH); Schneider, Hildegard, Dr., D-79585 Steinen (DE); Siegenthaler, Nikolaus, CH-4058 Basel (CH)

(56) Entgegenhaltungen:
- EP-A- 0 315 084
- EP-A- 0 328 020
- EP-A- 0 362 138
- EP-A- 0 391 370
- CHEMICAL ABSTRACTS, vol. 110, no. 1, 2. Januar 1989, Columbus, Ohio, US; abstract no. 8219, 'Preparation of N-containing heterocyclictetrafluorobo- rates as phase-transfer catalysts and electrolytes' & JP-A-63 115 876 (MITSUBISHI)
- CHEMICAL ABSTRACTS, vol. 72, no. 16, 20. April 1970, Columbus, Ohio, US; abstract no. 79776, 'Catalysis of epoxide phenol reactions with n,n-dialkyl acid amides' & J. PAINT TECHNOL., Bd.42, 1970 Seiten 48 - 54 F.B. ALVEY

## Beschreibung

Die vorliegende Erfindung betrifft Epoxidharzgemische, welche in Gegenwart von Perhydroazepinium- oder Octahydroazociniumsalzen vorverlängert werden können sowie die Verwendung dieser Salze als Vorverlängerungskatalysatoren für Epoxidharze.

Unter Vorverlängerung von Epoxidharzen wird im allgemeinen eine Kettenverlängerung und damit verbunden eine Molekulargewichtserhöhung von Epoxidharzen verstanden. Dabei spielt vor allem die Selektivität des verwendeten Katalysators eine Rolle, welche die Erzeugung linearer, also nichtverzweigter Polyhydroxyether sicherstellen soll.

Viele Verbindungen wurden als Katalysatoren für die Vorverlängerung flüssiger Epoxidharze bereits vorgeschlagen oder beschrieben. Zum Teil sind diese jedoch nicht selektiv und verursachen die obenerwähnte Verzweigung oder sogar eine Vernetzung der bereits gebildeten Oligomeren.

Aus dem US-Patent 4,465,722 sind als Vorverlängerungskatalysatoren (advancement catalysts) zum Beispiel die Tetraalkylammoniumhydroxide oder -halogenide bekannt.

In den EP-Anmeldungen 0 314 619; 0 362 138 und 0 362 140 werden als Vorverlängerungskatalysatoren quaternäre Piperidiniumsalze, quaternäre Pyrrolidiniumsalze und quaternäre Morpholiniumbromide und -jodide verwendet. Diese Vorverlängerungskatalysatoren ergeben vorverlängerte Epoxidharze, welche sich zwar durch niedrige Viskosität und hohe Linearität auszeichnen, doch ist deren Viskositätsaufbau bei thermischer Belastung, wie sie beispielsweise bei langsamer Entladung einer Produktecharge aus dem Reaktor auftreten kann, noch zu hoch.

Es wurde nun gefunden, dass man bei Verwendung von bestimmten quaternären Perhydroazepiniumsalzen (Hexamethylenammoniumsalze oder quaternäre Salze des Hexamethylenimins) und quaternären Octahydroazociniumsalzen (Heptamethylenammoniumsalze) zur Vorverlängerung von flüssigen Epoxidharzen vorverlängerte Epoxidharze erhält, welche den oben genannten Nachteil nicht aufweisen.

Im Chemical Abstracts, Vol. 110, No. 1 (1989), 8219 der JP-A-63115876 wird die Herstellung von 1-Ethyl-1-methylhexahydroazepiniumtetrafluoroborat und dessen Verwendung als Phasentransferkatalysator offenbart. Ein Hinweis, dass dieser Katalysator auch in der Epoxidharzchemie anwendbar ist, lässt sich dieser Publikation nicht entnehmen.

Die vorliegende Erfindung betrifft somit eine Epoxidharzzusammensetzung, enthaltend ein bei Raumtemperatur flüssiges Epoxidharz mit durchschnittlich mehr als einer Epoxidgruppe pro Molekül und ein quaternäres Perhydroazepiniumsalz oder ein quaternäres Octahydroazociniumsalz als Vorverlängerungskatalysator.

Als Epoxidverbindungen kommen vor allem solche in Frage, deren Molekulargewicht relativ niedrig ist, z.B. Diglycidylverbindungen mit einem Molekulargewicht von kleiner als 3 500, insbesondere kleiner als 2 000, bevorzugt zwischen 175 und 350. Bei den vorzugsweise verwendeten Diglycidylverbindungen kann es sich um Glycidylether oder -ester handeln; ferner können die Glycidylgruppen auch an Stickstoffatome geknüpft sein. Als Phenole, welche den Ethern zugrunde liegen, sind beispielsweise die folgenden zu nennen: einkernige Diphenole, wie Resorcin, Naphthaline mit zwei Hydroxylgruppen, wie 1,4-Dihydroxynaphthalin, Biphenyle und andere zweikernige aromatische Verbindungen, die eine Methylen-, Isopropyliden-, -O-, -SO₂-, oder -S-Brücke aufweisen und zwei Hydroxylgruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A. Im weiteren kommen aliphatische Dihydroxyverbindungen in Betracht, beispielsweise 1,4-Butandiol oder Polyetherglykol. Als Basis für die Glycidylester dienen beispielsweise die Phthalsäure, Terephthalsäure, Tetrahydrophthalsäure, Hexahydrophthalsäure, Adipinsäure, Trimethyladipinsäure oder Sebazinsäure. Ferner kommen einkernige Hydantoine mit Glycidylgruppen an den Stickstoffatomen, wie N,N'-Diglycidyl-hydantoine, in Frage. Andere Glycidylverbindungen von Stickstoff enthaltenden Ringen sind solche von 5,6-Dihydrourazilen oder Barbitursäuren.

Dabei handelt es sich um bekannte und mehrheitlich käufliche Epoxidverbindungen.

Erfindungsgemäss werden zum Beispiel Perhydroazepiniumsalze oder Octahydroazociniumsalze eingesetzt, welche der Formel I oder II entsprechen 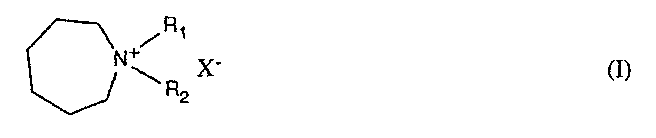 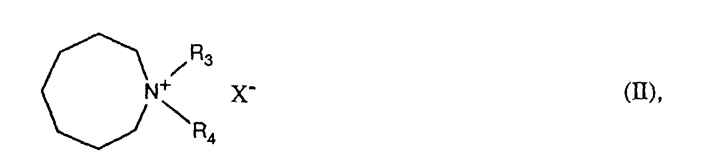 worin R₁ ein C₁-C₈-Alkyl und R₂ ein C₁-C₈-Alkyl, C₁-C₈-Hydroxyalkyl, C₁-C₈-Alkoxyalkyl, C₁-C₈-Alkoxy-hydroxyalkyl, C₁-C₈-Alkenyl, C₁-C₈-Alkoxycarbonylalkyl, C₁-C₈-Alkylcarbonylalkyl, C₇-C₉-Phenylalkyl oder C₇-C₉-Phenylhydroxyalkyl bedeuten, R₃ ein C₁-C₈-Alkyl und R₄ ein C₁-C₈-Alkyl, C₁-C₈-Hydroxyalkyl, C₁-C₈-Alkoxyalkyl, C₁-C₈-Alkoxy-hydroxyalkyl, C₁-C₈-Alkenyl, C₁-C₈-Alkoxycarbonylalkyl, C₁-C₈-Alkylcarbonylalkyl, C₇-C₉-Phenylalkyl oder C₇-C₉-Phenylhydroxyalkyl bedeuten und X für ein Halogenatom, Acetat, BF₄, PF₆, AsF₆ oder SbF₆ steht.

Als Perhydroazepiniumsalze oder Octahydroazociniumsalze eignen sich vorzugsweise solche, worin in Formel I oder II R₁ und R₂ gleich sind und je ein C₁-C₈-Alkyl bedeuten, R₃ und R₄ gleich sind und je ein C₁-C₈-Alkyl bedeuten und X für ein Halogenatom steht.

Als C₁-C₈-Alkyl-Reste, bevorzugt C₁-C₄-Alkyl-Reste, kommen Methyl, Ethyl, 1-Propyl, 1-n-Butyl, 1-n-Hexyl oder 1-n-Octyl in Frage. Diese Reste können insbesondere in 2-Stellung, falls vorhanden, eine Hydroxygruppe tragen.
Insbesondere sind R₁ und R₂ sowie R₃ und R₄ gleich und bedeuten Methyl, Ethyl, 1-Propyl oder 1-n-Butyl und steht X für Brom oder Jod.

Mit C₁-C₈-Alkoxy-hydroxyalkyl werden Reste bezeichnet, die sowohl eine Etherfunktion als auch eine Hydroxygruppe enthalten, wie beispielsweise 2-Hydroxy-3-butoxypropyl.

Bedeuten R₂ und R₄ ein Alkenyl, so kann es beispielsweise Allyl oder Methallyl sein. Weitere Beispiele für R₂ und R₄ sind Acetonyl, Acetoxyethyl oder 2-Hydroxy-2-phenylethyl.

X als Halogen ist vorzugsweise Jod, Brom oder Chlor, insbesondere Brom oder Jod.

Vorzugsweise enthalten die erfindungsgemässen Epoxidharzzusammensetzungen ein Perhydroazepiniumsalz der Formel I.

Insbesondere enthalten die erfindungsgemässen Epoxidharzzusammensetzungen als Perhydroazepiniumsalz der Formel I N,N-Dimethylperhydroazepiniumjodid, N,N-Diethylperhydroazepiniumjodid, N,N-Dipropylperhydroazepiniumjodid, N-n-Butyl-N-ethylperhydroazepiniumbromid oder N-n-Butyl-N-n-propyl-perhydroazepiniumjodid.

Die Verbindungen der Formeln I und II sind bekannt und können auf bekannte Weise hergestellt werden, indem man beispielsweise Perhydroazepin (Hexamethylenimin) oder Azacyclooctan (Heptamethylenimin) mit einem unsubstituierten oder substituierten Alkylhalogenid in einem Molverhältnis von 1:2 umsetzt. Voneinander verschieden substituierte Verbindungen der Formel I oder II können ebenfalls in bekannter Weise hergestellt werden, indem man beispielsweise ein R₁- bzw. R₃-substituiertes Perhydroazepin bzw. Azacyclooctan mit einem unsubstituierten oder substituierten Alkylhalogenid in einem Molverhältnis von etwa 1:1 umsetzt. In diesem Zusammenhang wird auf die Herstellungsbeispiele verwiesen.

Die erfindungsgemäss zu verwendenden Perhydroazepiniumsalze und Octahydroazociniumsalze werden in katalytisch wirksamen Mengen eingesetzt, zum Beispiel in einer Menge von etwa 2 bis 2000 ppm (parts per million), vorzugsweise 10-700 ppm und insbesondere 30-500 ppm, bezogen auf das Gewicht des Basisharzes.

Das Vorverlängerungsverfahren wird bekanntermassen durchgeführt, beispielsweise durch Umsetzung des Epoxidharzes mit Verbindungen, welche vorzugsweise zwei phenolische Hydroxylgruppen enthalten, wobei das Epoxidharz in molarem Überschuss vorliegt und die Umsetzung im allgemeinen bei erhöhter Temperatur, beispielsweise bei 150-220°C, vorzugsweise bei 160-200°C, vorgenommen wird.

Dabei können alle in der Methodik der Vorverlängerung bekannten aromatischen Verbindungen mit vorzugsweise zwei phenolischen Hydroxylgruppen verwendet werden. Beispielsweise seien genannt: einkernige Diphenole (wie Resorcin), Naphthaline mit zwei Hydroxylgruppen, wie 1,4-Dihydroxynaphthalin, Biphenyle und andere zweikernige aromatische Verbindungen, die eine Methylen-, Isopropyliden-, -O-, -SO₂-, oder -S-Brücke aufweisen und zwei Hydroxylgruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A.

Die Menge des Phenols hängt davon ab, was für ein Produkt gewünscht wird. Je grösser sie ist, desto höher wird das Molekulargewicht des Endproduktes im allgemeinen sein.

Dabei wird auch der Schmelzpunkt ansteigen und werden sich die physikalischen und chemischen Eigenschaften des gewonnenen Harzes ändern.

Die Vorverlängerungsverfahren und ihre Durchführung sind bekannt und beispielsweise in den US 3,275,708 und 4,465,722 beschrieben.

Dabei erfolgt die Umsetzung beispielsweise bei einer Temperatur von 100-220°C, bevorzugt 120-190°C und einem Druck von 1x10³ - 1x10⁵ Pa (10-1000 mbar), bevorzugt 2-8x10⁴ Pa (200-800 mbar).

Die auf diese Weise erhaltenen vorverlängerten Epoxidharze zeichnen sich durch hohe Stabilität der Epoxidzahl und der Viskosität nach thermischer Belastung aus. Ausserdem besitzen diese Harze eine für die Weiterverarbeitung günstige, niedrige Viskosität Es hat sich gezeigt, dass die erfindungsgemäss einzusetzenden Vorverlängerungskatalysatoren eine konstante Aktivität in der Reaktion besitzen und durch ihre hohe Selektivität zu weitgehend linearen Produkten führen. Auf den Einsatz eines Kettenabbrechers kann ausserdem verzichtet werden. Falls erwünscht ist auch die Verwendung eines monofunktionellen Kettenabbrechers, z.B. eines Phenols, für die optimale Durchführung der Vorverlängerung geeignet. Die Katalysatoren sind in relativ kleinen Mengen wirksam, die Reaktion verläuft rasch und es ist eine nur geringe Neigung zu unerwünschter Phenolspaltung festzustellen. Dies zeigt sich in einem guten Farbverhalten der Produkte.

Die gehärteten Endprodukte, hergestellt durch Vernetzen der vorverlängerten Epoxidharze mit üblichen Härtungsmitteln für Epoxidharze, wie Säureanhydride, Polyamine, mehrwertige Phenole usw., weisen eine gute Flexibilität auf.

Die Produkte können für den Oberflächenschutz, zur Herstellung von Giesslingen, insbesondere auf dem Elektrogebiet, von Prepregs und Laminaten verwendet werden.

Besonders erwähnenswert ist ihreVerwendung als Bindemittel für Lacke, besonders für Einbrennlacke.

### Herstellung der Vorverlängerungskatalysatoren

### Beispiel A: N,N-Di-n-butylperhydroazepiniumjodid

In einem 750 ml-Sulfierkolben, ausgerüstet mit Rührer, Thermometer, Rückflusskühler, Tropftrichter und Thermostat mit Ölbad, werden 23,2 ml (0,2 Mol) Perhydroazepin (Hexamethylenimin), 100 ml Methylisobutylketon und 22 g Natriumcarbonat vorgelegt. Dann werden 45, 7 ml (0,4 Mol) 1-Butyljodid und 100 ml Methylisobutylketon während 30 Minuten unter Rühren des Gemisches zugetropft. Nach 30 Minuten wird das Reaktionsgemisch mit 80 ml Methanol verdünnt, und man lässt das Reaktionsgemisch während 6 Stunden bei 60°C reagieren. Anschliessend wird das Reaktionsgemisch filtriert, und der Niederschlag wird dreimal mit 50 ml Methanol gewaschen. Das Filtrat wird am Rotationsverdampfer eingeengt. Der erhaltene Kristallbrei wird abgenutscht, aus Methylisobutylketon umkristallisiert und bei 50°C im Vakuumofen getrocknet.
Ausbeute: 59% der Theorie. Schmelzpunkt: 156-158°C.

### Beispiel B: N,N-Di-n-propylperhydroazepiniumjodid

Das im Beispiel A angegebene Verfahren wird wiederholt, wobei anstelle von 1-Butyljodid nun 39,0 ml (0,4 Mol) 1-Propyljodid eingesetzt werden.
Ausbeute: 63% der Theorie. Schmelzpunkt: 160-162°C.

### Beispiel C: N,N-Diethylperhydroazepiniumjodid

Das im Beispiel A angegebene Verfahren wird wiederholt, wobei anstelle von 1-Butyljodid nun 32,3 ml (0,4 Mol) Ethyljodid eingesetzt werden. Die Reaktionsdauer beträgt bei 60°C 8 Stunden.
Ausbeute: 73% der Theorie. Schmelzpunkt: 226°C.

### Beispiel D: N,N-Dimethylperhydroazepiniumjodid

Das im Beispiel A angegebene Verfahren wird wiederholt, wobei anstelle von 1-Butyljodid nun 25,0 ml (0,4 Mol) Methyljodid eingesetzt werden.
Ausbeute: 72% der Theorie. Schmelzpunkt: 281°C.

### Beispiel E: N,N-Di-n-butylperhydroazepiniumbromid

Das im Beispiel A angegebene Verfahren wird wiederholt, wobei anstelle von 1-Butyljodid nun 44,0 ml (0,4 Mol) 1-Butylbromid eingesetzt werden. Ausserdem werden statt 22 g Natriumcarbonat nun 24 g davon vorgelegt.
Ausbeute: 46% der Theorie. Schmelzpunkt: 186°C.

### Beispiel F: N,N-Di-1-propylperhydroazepiniumbromid

Das im Beispiel A angegebene Verfahren wird wiederholt, wobei anstelle von 1-Butyljodid nun 38,0 ml (0,4 Mol) 1-Propylbromid eingesetzt werden. Ausserdem werden statt 22 g Natriumcarbonat nun 24 g davon vorgelegt, und die Reaktionsdauer beträgt bei 60°C 10 Stunden.
Ausbeute: 66% der Theorie. Schmelzpunkt: 226°C.

### Beispiel G: N,N-Diethylperhydroazepiniumbromid

Das im Beispiel A angegebene Verfahren wird wiederholt, wobei anstelle von 1-Butyljodid nun 30,0 ml (0,4 Mol) Ethylbromid eingesetzt werden. Ausserdem werden statt 22 g Natriumcarbonat nun 24 g davon und statt 100 ml nun 150 ml Methylisobutylketon vorgelegt, und die Reaktionslösung wird mit 100 ml Methanol verdünnt. Die Reaktionsdauer beträgt bei 60°C 10 Stunden.
Ausbeute: 78% der Theorie. Schmelzpunkt: 212°C.

### Beispiel H: N,N-Diethyloctahydroazociniumjodid

Das im Beispiel A angegebene Verfahren wird wiederholt, wobei nun 13,1 ml (0,1 Mol) Azacyclooctan (Heptamethylenimin), 16,2 ml (0,2 Mol) Ethyljodid, 12 g Natriumcarbonat und 60 ml Methanol als Verdünner eingesetzt werden. Die Reaktionsdauer beträgt bei 65°C 10 Stunden.
Ausbeute: 75% der Theorie. Schmelzpunkt: 222°C.

### Beispiel I: N,N-Di-n-propyloctahydroazociniumjodid

Beispiel H wird wiederholt, wobei anstelle von Ethyljodid nun 19,5 ml (0,2 Mol) 1-Propyljodid und 12 g Natriumcarbonat eingesetzt werden.
Ausbeute: 63% der Theorie. Schmelzpunkt: 96°C.

### Beispiel J: N,N-Di-n-butyloctahydroazociniumbromid

Beispiel H wird wiederholt, wobei anstelle von Ethyljodid nun 44 ml (0,2 Mol) 1-Butylbromid, 60 ml Methylisobutylketon und 60 ml Methanol als Verdünner eingesetzt werden. Die Reaktionsdauer beträgt bei 70°C 15 Stunden.
Ausbeute: 43% der Theorie. Schmelzpunkt: 200°C

### Beispiel K: N-n-Butyl-N-ethyl-perhydroazepiniumjodid

In einem Sulfierkolben von 1000 ml Inhalt, versehen mit Rührer und Tropftrichter, werden folgende Substanzen in derselben Reihenfolge vermischt:
100 ml Methylisobutylketon (MIBK),
30,2 g N-n-Butylhexamethylenimin und
39,3 g Ethyljodid (ex Tropftrichter).
Die Mischung wird unter Rühren bis auf 50°C erwärmt, wobei das Gemisch nach wenigen Minuten trüb wird und nach längerer Zeit einen Kristallbrei abscheidet. Nach einer Reaktionszeit von 6 Stunden wird der Kristallbrei abgenutscht, mit MIBK nachgewaschen und im Vakuum getrocknet.
Ausbeute: 42,6 g (69% der Theorie) Schmelzpunkt: 227°C.

### Beispiel L: N-n-Butyl-N-methyl-perhydroazepiniumjodid

In einem Sulfierkolben von 1000 ml Inhalt, versehen mit Rührer und Tropftrichter, werden folgende Substanzen in derselben Reihenfolge vermischt:
100 ml Methylisobutylketon (MIBK),
30,2 g N-n-Butylhexamethylenimin und
39,3 g Methyljodid (ex Tropftrichter).
Die Mischung wird unter Rühren bis auf 40°C erwärmt, wobei das Gemisch sofort trüb wird und nach kurzer Zeit einen Kristallbrei abscheidet. Nach einer Reaktionszeit von 6 Stunden wird der Kristallbrei abgenutscht, mit MIBK nachgewaschen und im Vakuum getrocknet.
Ausbeute: 52,7 g (90% der Theorie) Schmelzpunkt: 216°C.

### Beispiel M: N-n-Butyl-N-n-propyl-perhydroazepiniumjodid

In einem Sulfierkolben von 1000 ml Inhalt, versehen mit Rührer und Tropftrichter, werden folgende Substanzen in derselben Reihenfolge vermischt:
100 ml Methylisobutylketon (MIBK),
30,2 g N-n-Butylhexamethylenimin und
39,3 g 1-Propyljodid (ex Tropftrichter).
Die Mischung wird unter Rühren bis auf 60°C erwärmt, wobei das Gemisch nach wenigen Minuten trüb wird und nach längerer Zeit einen Kristallbrei abscheidet. Nach einer Reaktionszeit von 7 Stunden wird der Kristallbrei abgenutscht, mit MIBK nachgewaschen und im Vakuum getrocknet.
Ausbeute: 30,6 g (48% der Theorie) Schmelzpunkt: 222°C.

### Beispiel N: N-n-Butyl-N-n-propyl-perhydroazepiniumbromid

In einem Sulfierkolben von 1000 ml Inhalt, versehen mit Rührer und Tropftrichter, werden folgende Substanzen in derselben Reihenfolge vermischt:
100 ml Methylisobutylketon (MIBK),
30,2 g N-n-Butylhexamethylenimin und
30,8 g 1-Propylbromid (ex Tropftrichter).
Die Mischung wird unter Rühren bis auf 70°C erwärmt, wobei das Gemisch nach wenigen Minuten trüb wird und nach längerer Zeit einen Kristallbrei abscheidet. Nach einer Reaktionszeit von 9 Stunden wird der Kristallbrei abgenutscht, mit MIBK nachgewaschen und im Vakuum getrocknet.
Ausbeute: 18,0 g (33% der Theorie) Schmelzpunkt: 229°C.

### Beispiel O: N-n-Butyl-N-ethyl-perhydroazepiniumbromid

In einem Sulfierkolben von 1000 ml Inhalt, versehen mit Rührer und Tropftrichter, werden folgende Substanzen in derselben Reihenfolge vermischt:
100 ml Methylisobutylketon (MIBK),
30,2 g N-n-Butylhexamethylenimin und
39,3 g Ethylbromid (ex Tropftrichter).
Die Mischung wird unter Rühren bis auf 50°C erwärmt, wobei das Gemisch nach wenigen Minuten trüb wird und nach längerer Zeit einen Kristallbrei abscheidet. Nach einer Reaktionszeit von 10 Stunden wird der Kristallbrei abgenutscht, mit MIBK nachgewaschen und im Vakuum getrocknet.
Ausbeute: 33,0 g (63% der Theorie) Schmelzpunkt: 207°C.

### Durchführung des Vorverlängerungsverfahrens (Advancement-Verfahren)

In den folgenden Beispielen 1 bis 10 werden Epoxidharze mit einem gewünschten Epoxidgehalt von etwa 0,6 Äquivalenten/kg hergestellt.

### Beispiel 1

In einem 1,5-Liter-Polymerkolben werden 845 g Bisphenol A-diglycidylether mit einem Epoxidgehalt von 5,4 Äquivalenten/kg unter Rühren bei 30 bis 60°C mit 465 mg des gemäss Beispiel D hergestellten Katalysators, gelöst in 2 bis 3 ml Methanol, vermischt. Dann wird die Temperatur unter Rühren des Gemisches auf 100°C angehoben, und es werden 215 g Bisphenol A zugegeben und aufgelöst. Das Gemisch wird auf 170°C erwärmt, und es werden weitere 215 g Bisphenol A hinzugefügt. Die Reaktion wird bei 180°C und einem partiellen Vakuum von 500 mbar geführt. Nach 3,5 Stunden hat das vorverlängerte Epoxidharz den gewünschten Epoxidgehalt von 0,59 Äquivalenten/kg erreicht, so dass die Harzschmelze ausgetragen, abgekühlt und zerkleinert werden kann. Die Viskosität des Harzes, gemessen in Butylcarbitol bei 25°C und einem Festgehalt von 40% mit einem Hoepler-Viskosimeter, beträgt für den Blankwert 2240 mPa·s.
Nach einer thermischen Behandlung des Epoxidharzes während 4 Stunden (h) bei 180°C beträgt der Epoxidgehalt 0,54 Äquivalente/kg, und das vorverlängerte Epoxidharz hat eine Viskosität von 2850 mPa·s. Der Quotient aus der Viskosität des Harzes nach einer thermischen Behandlung zur Viskosität vor der thermischen Behandlung (Blankwert) ergibt den Viskositätsaufbaufaktor, der ein Mass für die Qualität des vorverlängerten Harzes darstellt

### Beispiel 2

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
407 g Bisphenol A und
423 mg Katalysator gemäss Beispiel C.
Reaktionsbedingungen = 4 h bei 180°C.
Das erhaltene vorverlängerte Epoxidharz weist folgende Eigenschaften auf:

| | |
|---|---|
| Epoxidgehalt, blank | = 0,60 Äquivalente/kg |
| Epoxidgehalt nach 4 h bei 180°C | = 0,54 Äquivalente/kg |
| Viskosität, blank | = 2660 mPa·s |
| Viskosität nach 4 h bei 180°C | = 3050 mPa·s |
| Viskositätsaufbaufaktor | = 1,15 ± 0,07 (bei 5 Wiederholungen). |

### Beispiel 3

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
416 g Bisphenol A und
592 mg Katalysator gemäss Beispiel A.
Reaktionsbedingungen = 3 h bei 180°C.
Das erhaltene vorverlängerte Epoxidharz weist folgende Eigenschaften auf:

| | |
|---|---|
| Epoxidgehalt, blank | = 0,59 Äquivalente/kg |
| Epoxidgehalt nach 4 h bei 180°C | = 0,54 Äquivalente/kg |
| Viskosität, blank | = 2500 mPa·s |
| Viskosität nach 4 h bei 180°C | = 2920 mPa·s |
| Viskositätsaufbaufaktor | = 1,17 ± 0,03 (bei 5 Wiederholungen). |

### Beispiel 4

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
433 g Bisphenol A und
760 mg Katalysator gemäss Beispiel A.
Reaktionsbedingungen = 4,5 h bei 180°C.
Das erhaltene vorverlängerte Epoxidharz weist folgende Eigenschaften auf:

| | |
|---|---|
| Epoxidgehalt, blank | = 0,59 Äquivalente/kg |
| Epoxidgehalt nach 4 h bei 180°C | = 0,51 Äquivalente/kg |
| Viskosität, blank | = 2570 mPa·s |
| Viskosität nach 4 h bei 180°C | = 3340 mPa·s |
| Viskositätsaufbaufaktor | = 1,3. |

### Beispiel 5

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
422 g Bisphenol A und
507 mg Katalysator gemäss Beispiel G.
Reaktionsbedingungen = 4 h bei 180°C.
Das erhaltene vorverlängerte Epoxidharz weist folgende Eigenschaften auf:

| | |
|---|---|
| Epoxidgehalt, blank | = 0,59 Äquivalente/kg |
| Epoxidgehalt nach 4 h bei 180°C | = 0,53 Äquivalente/kg |
| Viskosität, blank | = 2830 mPa·s |
| Viskosität nach 4 h bei 180°C | = 3900 mPa·s |
| Viskositätsaufbaufaktor | = 1,3. |

### Beispiel 6

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
418 g Bisphenol A und
676 mg Katalysator gemäss Beispiel F.
Reaktionsbedingungen = 3,5 h bei 180°C.
Das erhaltene vorverlängerte Epoxidharz weist folgende Eigenschaften auf:

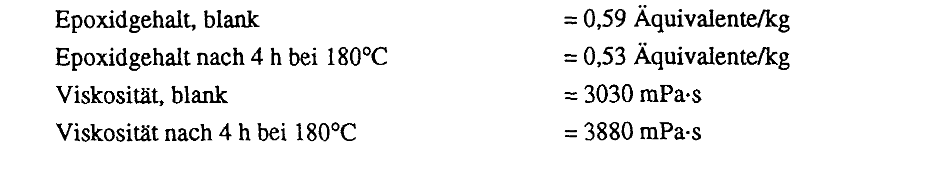

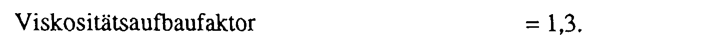

### Beispiel 7

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
417 g Bisphenol A und
676 mg Katalysator gemäss Beispiel E.
Reaktionsbedingungen = 4 h bei 180°C.
Das erhaltene vorverlängerte Epoxidharz weist folgende Eigenschaften auf:

| | |
|---|---|
| Epoxidgehalt, blank | = 0,59 Äquivalente/kg |
| Epoxidgehalt nach 4 h bei 180°C | = 0,55 Äquivalente/kg |
| Viskosität, blank | = 2950 mPa·s |
| Viskosität nach 4 h bei 180°C | = 3660 mPa·s |
| Viskositätsaufbaufaktor | = 1,2. |

### Beispiel 8

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
413 g Bisphenol A und
507 mg Katalysator gemäss Beispiel H.
Reaktionsbedingungen = 4 h bei 180°C.
Das erhaltene vorverlängerte Epoxidharz weist folgende Eigenschaften auf:

| | |
|---|---|
| Epoxidgehalt, blank | = 0,59 Äquivalente/kg |
| Epoxidgehalt nach 4 h bei 180°C | = 0,51 Äquivalente/kg |
| Viskosität, blank | = 2800 mPa·s |
| Viskosität nach 4 h bei 180°C | = 3580 mPa·s |
| Viskositätsaufbaufaktor | = 1,3. |

### Beispiel 9

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
407 g Bisphenol A und
507 mg Katalysator gemäss Beispiel I.
Reaktionsbedingungen = 4 h bei 180°C.
Das erhaltene vorverlängerte Epoxidharz weist folgende Eigenschaften auf:

| | |
|---|---|
| Epoxidgehalt, blank | = 0,57 Äquivalente/kg |
| Epoxidgehalt nach 4 h bei 180°C | = 0,52 Äquivalente/kg |
| Viskosität, blank | = 2640 mPa·s |
| Viskosität nach 4 h bei 180°C | = 3340 mPa·s |
| Viskositätsaufbaufaktor | = 1,3. |

### Beispiel 10

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
419 g Bisphenol A und
507 mg Katalysator gemäss Beispiel J.
Reaktionsbedingungen = 3 h bei 180°C.
Das erhaltene vorverlängerte Epoxidharz weist folgende Eigenschaften auf:

| | |
|---|---|
| Epoxidgehalt, blank | = 0,58 Äquivalente/kg |
| Epoxidgehalt nach 4 h bei 180°C | = 0,54 Äquivalente/kg |
| Viskosität, blank | = 3800 mPa·s |
| Viskosität nach 4 h bei 180°C | = 5050 mPa·s |
| Viskositätsaufbaufaktor | = 1,3. |

### Beispiel 11

Analog Beispiel 1 wird ein vorverlängertes Epoxidharz unter Verwendung folgender Verbindungen hergestellt:
845 g Bisphenol A-diglycidylether, Epoxidgehalt = 5,4 Äquivalente/kg,
329 g Bisphenol A und
211 mg Katalysator gemäss Beispiel B.
Reaktionsbedingungen = 2,5 h bei 180°C.
Das erhaltene vorverlängerte Epoxidharz weist folgende Eigenschaften auf:

| | |
|---|---|
| Epoxidgehalt, blank | = 1,14 Äquivalente/kg |
| Epoxidgehalt nach 4 h bei 180°C | = 1,35 Äquivalente/kg |
| Viskosität, blank | = 510 mPa·s |
| Viskosität nach 4 h bei 180°C | = 615 mPa·s |
| Viskositätsaufbaufaktor | = 1,2. |

### Beispiel 12

Analog Beispiel 1 wird ein vorverlängertes Epoxidharz unter Verwendung folgender Verbindungen hergestellt:
600 g Bisphenol A-diglycidylether, Epoxidgehalt = 5,4 Äquivalente/kg,
322 g Bisphenol A und
420 mg Katalysator gemäss Beispiel B.
Reaktionsbedingungen = 3 h bei 180°C.
Das erhaltene vorverlängerte Epoxidharz weist folgende Eigenschaften auf:

| | |
|---|---|
| Epoxidgehalt, blank | = 0,41 Äquivalente/kg |
| Epoxidgehalt nach 4 h bei 180°C | = 0,38 Äquivalente/kg |
| Viskosität, blank | = 3980 mPa·s |
| Viskosität nach 4 h bei 180°C | = 5100 mPa·s |
| Viskositätsaufbaufaktor | = 1,3. |

### Beispiel 13

Analog Beispiel 1 wird ein vorverlängertes Epoxidharz unter Venvendung folgender Verbindungen hergestellt:
300 g Bisphenol A-diglycidylether, Epoxidgehalt = 5,4 Äquivalente/kg, gelöst in 54 g Cyclohexanon,
183 g Bisphenol A und
240 mg Katalysator gemäss Beispiel B.
Reaktionsbedingungen = 4 h bei 180°C.
Nach der Reaktion wird das Reaktionsgemisch mit 670 g 1-Methoxypropylacetat verdünnt (Polymergehalt = 40%).
Diese das vorverlängerte Epoxidharz enthaltende Lösung weist folgende Eigenschaften auf:

| | |
|---|---|
| Epoxidgehalt, blank | = 0,06 Äquivalente/kg *) |
| Epoxidgehalt nach 4 h bei 180°C | = 0,05 Äquivalente/kg *) |
| Viskosität, blank | = 2720 mPa·s |
| Viskosität nach 4 h bei 180°C | = 3030 |
| Viskositätsaufbaufaktor | = 1,1. |

| | |
|---|---|
| *) auf 100% vorverlängertes Epoxidharz umgerechnet | |

### Beispiel 14

Analog Beispiel 1 wird ein vorverlängertes Epoxidharz unter Verwendung folgender Verbindungen hergestellt:
845 g Bisphenol A-diglycidylether mit einem Epoxidgehalt von 5,4 Äquivalenten/kg,
432 g Bisphenol A und
680 mg Katalysator gemäss Beispiel K.
Reaktionsbedingungen = 4 h bei 180°C.
Das erhaltene vorverlängerte Epoxidharz weist folgende Eigenschaften auf:

| | |
|---|---|
| Epoxidgehalt, blank | = 0,59 Äquivalente/kg |
| Epoxidgehalt nach 4 h bei 180°C | = 0,52 Äquivalente/kg |
| Viskosität, blank | = 2130 mPa·s |
| Viskosität nach 4 h bei 180°C | = 2840 mPa·s |
| Viskositätsaufbaufaktor | = 1,3. |

### Beispiel 15

Analog Beispiel 1 wird ein vorverlängertes Epoxidharz unter Verwendung folgender Verbindungen hergestellt:
845 g Bisphenol A-diglycidylether mit einem Epoxidgehalt von 5,4 Äquivalenten/kg,
432 g Bisphenol A und
680 mg Katalysator gemäss Beispiel L.
Reaktionsbedingungen = 3 h bei 180°C.
Das erhaltene vorverlängerte Epoxidharz weist folgende Eigenschaften auf:

| | |
|---|---|
| Epoxidgehalt, blank | = 0,58 Äquivalente/kg |
| Epoxidgehalt nach 4 h bei 180°C | = 0,53 Äquivalente/kg |
| Viskosität, blank | = 2410 mPa·s |
| Viskosität nach 4 h bei 180°C | = 3110 mPa·s |
| Viskositätsaufbaufaktor | = 1,3. |

### Beispiel 16

Analog Beispiel 1 wird ein vorverlängertes Epoxidharz unter Verwendung folgender Verbindungen hergestellt:
845 g Bisphenol A-diglycidylether mit einem Epoxidgehalt von 5,4 Äquivalenten/kg,
432 g Bisphenol A und
680 mg Katalysator gemäss Beispiel M.
Reaktionsbedingungen = 3,5 h bei 180°C.
Das erhaltene vorverlängerte Epoxidharz weist folgende Eigenschaften auf:

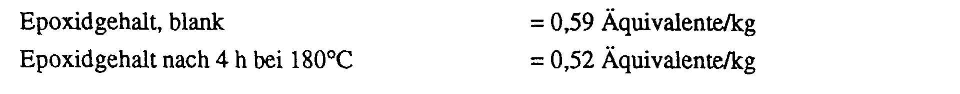

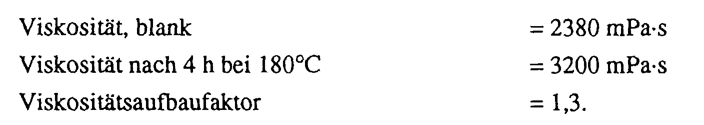

### Beispiel 17

Analog Beispiel 1 wird ein vorverlängertes Epoxidharz unter Verwendung folgender Verbindungen hergestellt:
845 g Bisphenol A-diglycidylether mit einem Epoxidgehalt von 5,4 Äquivalenten/kg,
432 g Bisphenol A und
680 mg Katalysator gemäss Beispiel N.
Reaktionsbedingungen = 4 h bei 180°C.
Das erhaltene vorverlängerte Epoxidharz weist folgende Eigenschaften auf:

| | |
|---|---|
| Epoxidgehalt, blank | = 0,59 Äquivalente/kg |
| Epoxidgehalt nach 4 h bei 180°C | = 0,54 Äquivalente/kg |
| Viskosität, blank | = 2560 mPa·s |
| Viskosität nach 4 h bei 180°C | = 3340 mPa·s |
| Viskositätsaufbaufaktor | = 1,3. |

### Beispiel 18

Analog Beispiel 1 wird ein vorverlängertes Epoxidharz unter Verwendung folgender Verbindungen hergestellt:
845 g Bisphenol A-diglycidylether mit einem Epoxidgehalt von 5,4 Äquivalenten/kg,
432 g Bisphenol A und
680 mg Katalysator gemäss Beispiel O.
Reaktionsbedingungen = 4 h bei 180°C.
Das erhaltene vorverlängerte Epoxidharz weist folgende Eigenschaften auf:

| | |
|---|---|
| Epoxidgehalt, blank | = 0,59 Äquivalente/kg |
| Epoxidgehalt nach 4 h bei 180°C | = 0,54 Äquivalente/kg |
| Viskosität, blank | = 2090 mPa·s |
| Viskosität nach 4 h bei 180°C | = 2800 mPa·s |
| Viskositätsaufbaufaktor | = 1,3. |

### Anwendungsbeispiel

Durch Mischen der folgenden Bestandteile wird ein Dosenlack hergestellt, der in bekannter Weise auf Aluminium (Al) und Weissblech (WB) appliziert wird.

| | |
|---|---|
| Harz gemäss Beispiel 12, (50 %ig in 1-Methoxy-2-propanol/1-Methoxy-2-propylacetat/Methylisobutylketon 70:20:10) | 70,0 Gew.-Teile |
| BAKELITE® 100* (Kresol-Resolharz; 50 %ig in Butanol) | 30,0 Gew.-Teile |
| | |
| Phosphorsäure, 10 %ig in 1-Methoxy-2-propanol | 2,5 Gew.-Teile |
| | |
| PLASTOPAL® EBS 600 B** (mit Butanol verethertes Harnstoff-Formaldehydharz, 25 %ig in Butanol) | 2,0 Gew.-Teile |
| | |
| Lösemittelgemisch aus 1-Methoxy-2-propanol/1-Methoxy-2-propylacetat/Methylisobutylketon (70:20:10) | 26,0 Gew.-Teile |
| Gebrauchsfertiger Walzlack | 132,5 Gew.-Teile |
| | |
| Auslaufzeit, DIN Becher 4, 20°C (DIN 53211) | = 70 s |
| Festkörpergehalt | = 38 Gew.-% |

| | |
|---|---|
| * BAKELITE 100: ex Bakelite GmbH | |
| ** PLASTOPAL EBS 600: ex BASF | |

Einbrennbedingungen: 10 min bei 205°C.

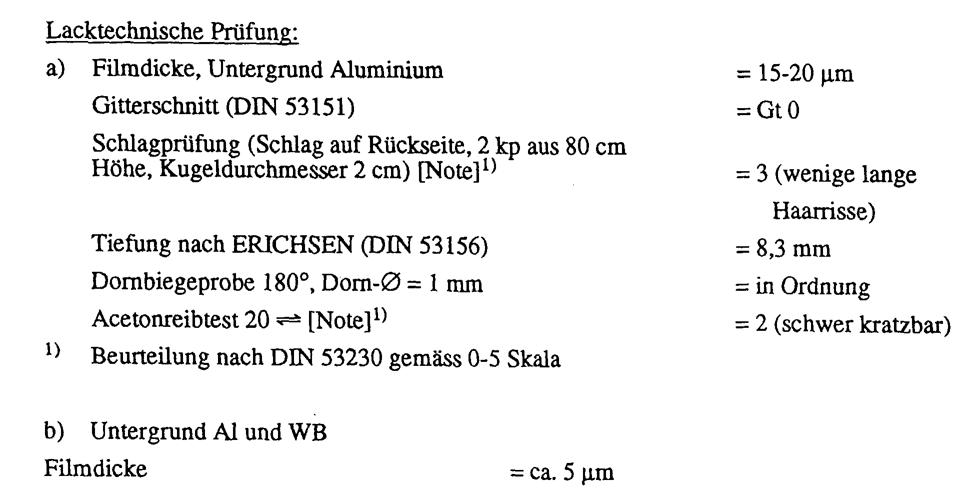

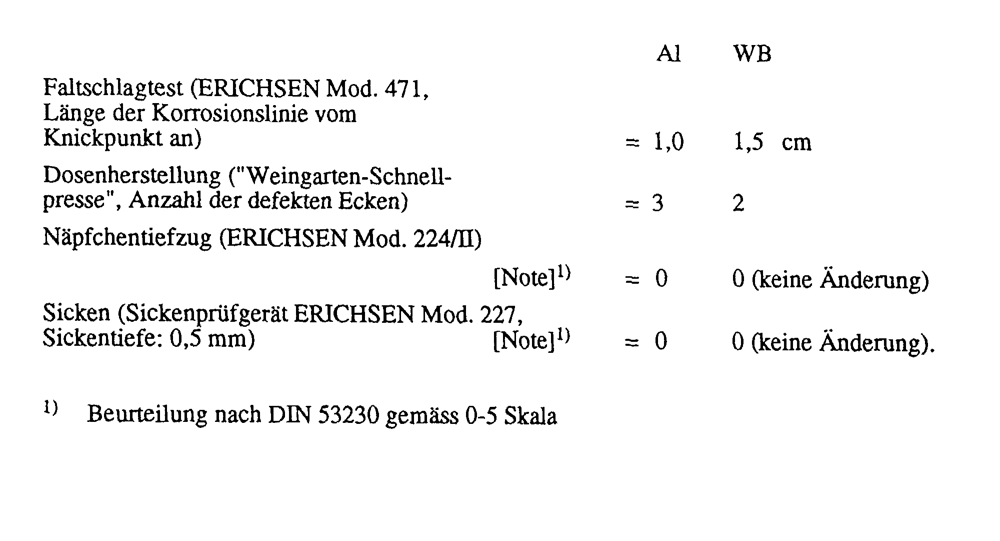

## Patentansprüche

1. Epoxidharzzusammensetzung, enthaltend ein bei Raumtemperatur flüssiges Epoxidharz mit durchschnittlich mehr als einer Epoxidgruppe pro Molekül und ein quaternäres Perhydroazepiniumsalz oder ein quaternäres Octahydroazociniumsalz als Vorverlängerungskatalysator.

2. Epoxidharzzusammensetzung gemäss Anspruch 1, enthaltend Diglycidylverbindungen mit einem Molekulargewicht von kleiner als 3500.

3. Epoxidharzzusammensetzung gemäss Anspruch 1, enthaltend ein Perhydroazepiniumsalz der Formel I 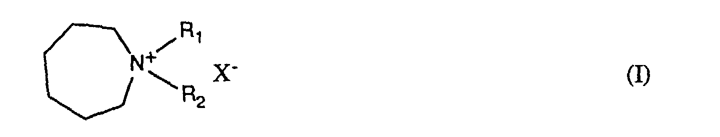 oder ein Octahydroazociniumsalz der Formel II 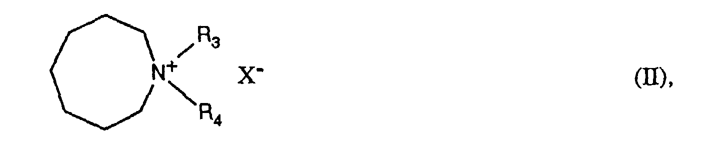 worin R₁ ein C₁-C₈-Alkyl und R₂ ein C₁-C₈-Alkyl, C₁-C₈-Hydroxyalkyl, C₁-C₈-Alkoxyalkyl, C₁-C₈-Alkoxy-hydroxyalkyl, C₁-C₈-Alkenyl, C₁-C₈-Alkoxycarbonylalkyl, C₁-C₈-Alkylcarbonylalkyl, C₇-C₉-Phenylalkyl oder C₇-C₉-Phenylhydroxyalkyl bedeuten, R₃ ein C₁-C₈-Alkyl und R₄ ein C₁-C₈-Alkyl, C₁-C₈-Hydroxyalkyl, C₁-C₈-Alkoxyalkyl, C₁-C₈-Alkoxy-hydroxyalkyl, C₁-C₈-Alkenyl, C₁-C₈-Alkoxycarbonylalkyl, C₁-C₈-Alkylcarbonylalkyl, C₇-C₉-Phenylalkyl oder C₇-C₉-Phenylhydroxyalkyl bedeuten und X für ein Halogenatom, Acetat, BF₄, PF₆, AsF₆ oder SbF₆ steht.

4. Epoxidharzzusammensetzung gemäss Anspruch 1, enthaltend ein Perhydroazepiniumsalz der Formel I oder ein Octahydroazociniumsalz der Formel II, worin R₁ und R₂ gleich sind und je ein C₁-C₈-Alkyl bedeuten, R₃ und R₄ gleich sind und je ein C₁-C₈-Alkyl bedeuten und X für ein Halogenatom steht.

5. Epoxidharzzusammensetzung gemäss Anspruch 4, enthaltend ein Perhydroazepiniumsalz der Formel I oder ein Octahydroazociniumsalz der Formel II, worin R₁ und R₂ gleich sind und je Methyl, Ethyl, 1-Propyl oder 1-n-Butyl bedeuten, R₃ und R₄ gleich sind und je Methyl, Ethyl, 1-Propyl oder 1-n-Butyl bedeuten und X für Brom oder Jod steht.

6. Epoxidharzzusammensetzung gemäss Anspruch 1, enthaltend ein Perhydroazepiniumsalz der Formel I.

7. Epoxidharzzusammensetzung gemäss Anspruch 6, enthaltend als Perhydroazepiniumsalz der Formel I N,N-Dimethylperhydroazepiniumjodid, N,N-Diethylperhydroazepiniumjodid, N,N-Dipropylperhydroazepiniumjodid, N-n-Butyl-N-ethyl-perhydroazepiniumbromid oder N-n-Butyl-N-n-propyl-perhydroazepiniumjodid.

8. Epoxidharzzusammensetzung gemäss Anspruch 1, enthaltend zusätzlich eine Verbindung mit zwei phenolischen Hydroxylgruppen.

9. Epoxidharzzusammensetzung gemäss Anspruch 8, enthaltend ein Bisphenol als Verbindung mit zwei phenolischen Hydroxylgruppen.

10. Verwendung von quaternären Perhydroazepiniumsalzen oder quaternären Octahydroazociniumsalzen als Vorverlängerungskatalysator für Epoxidharze.

## Claims

1. An epoxy resin composition comprising an epoxy resin which is liquid at room temperature and has on average more than one epoxy group per molecule and a quaternary perhydroazepinium salt or a quaternary octahydroazocinium salt as advancement catalyst.

2. An epoxy resin composition according to claim 1, comprising diglycidyl compounds having a molecular weight of less than 3500.

3. An epoxy resin composition according to claim 1, comprising a perhydroazepinium salt of the formula I 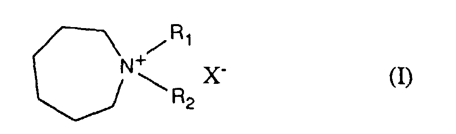 or an octahydroazocinium salt of the formula II 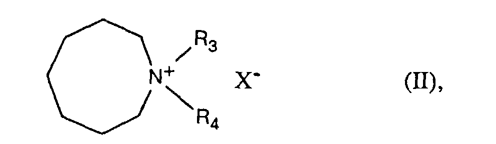 in which R₁ is C₁-C₈alkyl and R₂ is C₁-C₈alkyl, C₁-C₈hydroxyalkyl, C₁-C₈alkoxyalkyl, C₁-C₈alkoxyhydroxyalkyl, C₁-C₈alkenyl, C₁-C₈alkoxycarbonylalkyl, C₁-C₈alkylcarbonylalkyl, C₇-C₉phenylalkyl or C₇-C₉phenylhydroxyalkyl, R₃ is C₁-C₈alkyl and R₄ is C₁-C₈alkyl, C₁-C₈hydroxyalkyl, C₁-C₈alkoxyalkyl, C₁-C₈alkoxyhydroxyalkyl, C₁-C₈alkenyl, C₁-C₈alkoxycarbonylalkyl, C₁-C₈alkylcarbonylalkyl, C₇-C₉phenylalkyl or C₇-C₉phenylhydroxyalkyl, and X is a halogen atom, acetate, BF₄, PF₆, AsF₆ or SbF₆.

4. An epoxy resin composition according to claim 1, comprising a perhydroazepinium salt of the formula I or an octahydroazocinium salt of the formula II, in which R₁ and R₂ are identical and are each C₁-C₈alkyl, R₃ and R₄ are identical and are each C₁-C₈alkyl, and X is a halogen atom.

5. An epoxy resin composition according to claim 4, comprising a perhydroazepinium salt of the formula I or an octahydroazocinium salt of the formula II in which R₁ and R₂ are identical and are each methyl, ethyl, 1-propyl or 1-n-butyl, R₃ and R₄ are identical and are each methyl, ethyl, 1-propyl or 1-n-butyl, and X is bromine or iodine.

6. An epoxy resin composition according to claim 1, comprising a perhydroazepinium salt of the formula I.

7. An epoxy resin composition according to claim 6, comprising, as the perhydroazepinium salt of the formula I, N,N-dimethylperhydroazepinium iodide, N,N-diethylperhydroazepinium iodide, N,N-dipropylperhydroazepinium iodide, N-n-butyl-N-ethylperhydroazepinium bromide or N-n-butyl-N-n-propylperhydroazepinium iodide.

8. An epoxy resin composition according to claim 1, comprising additionally a compound having two phenolic hydroxyl groups.

9. An epoxy resin composition according to claim 8, comprising a bisphenol as the compound having two phenolic hydroxyl groups.

10. Use of a quaternary perhydroazepinium salt or quaternary octahydroazocinium salt as advancement catalyst for epoxy resins.

## Revendications

1. Composition de résine époxyde comprenant une résine époxyde liquide à la température ambiante, avec en moyenne plus d'un groupe époxyde par molécule et un sel quaternaire de perhydroazépinium ou un sel quaternaire d'octahydroazocinium en tant que catalyseur de préallongement de chaîne.

2. Composition de résine époxyde selon la revendication 1, contenant des composés de diglycidyle avec une masse moléculaire inférieure à 3500.

3. Composition de résine époxyde selon la revendication 1, contenant un sel de perhydroazépinium selon la formule I 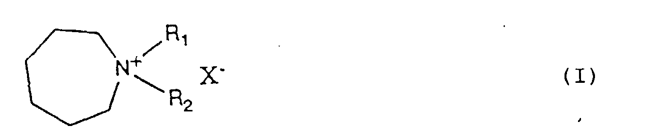 ou un sel d'octahydroazocinium selon la formule II 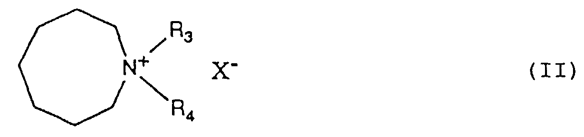 où R₁ est un groupe alkyle en C₁-C₈ et R₂ est un groupe alkyle en C₁-C₈, un groupe hydroxyalkyle en C₁-C₈, un groupe alcoxyalkyle en C₁-C₈, un groupe alcoxy-hydroxyalkyle en C₁-C₈, un groupe alcényle en C₁-C₈, un groupe alcoxycarbonylalkyle en C₁-C₈, un groupe alkylcarbonylalkyle en C₁-C₈, un groupe phénylalkyle en C₇-C₉ ou un groupe phénylhydroxyalkyle en C₇-C₉, R₃ est un groupe alkyle en C₁-C₈ et R₄ est un groupe alkyle en C₁-C₈, un groupe hydroxyalkyle en C₁-C₈, un groupe alcoxyalkyle en C₁-C₈, un groupe alcoxy-hydroxyalkyle en C₁-C₈, un groupe alcényle en C₁-C₈, un groupe alcoxycarbonylalkyle en C₁-C₈, un groupe alkylcarbonylalkyle en C₁-C₈, un groupe phénylalkyle en C₇-C₉ ou un groupe phénylhydroxyalkyle en C₇-C₉ et X est mis pour un atome d'halogène, un acétate, BF₄, PF₆, AsF₆ ou SbF₆.

4. Composition de résine époxyde selon la revendication 1, contenant un sel de perhydroazépinium selon la formule I ou un sel d'octahydroazocinium selon la formule II, dans lesquelles R₁ et R₂ sont semblables et signifient chacun un groupe alkyle en C₁-C₈, R₃ et R₄ sont semblables et signifient chacun un groupe alkyle en C₁-C₈ et X est mis pour un atome d'halogène.

5. Composition de résine époxyde selon la revendication 4, contenant un sel de perhydroazépinium selon la formule I ou un sel d'octahydroazocinium selon la formule Il, dans lesquelles R₁ et R₂ sont semblables et signifient chacun un groupe méthyle, un groupe éthyle, un groupe 1-propyle ou un groupe 1-n-butyle, R₃ et R₄ sont semblables et signifient chacun un groupe méthyle, un groupe éthyle, un groupe 1-propyle ou un groupe 1-n-butyle et X est mis pour du brome ou de l'iode.

6. Composition de résine époxyde selon la revendication 1, contenant un sel de perhydroazépinium selon la formule I.

7. Composition de résine époxyde selon la revendication 6, contenant comme sel de perhydroazépinium selon la formule I, du iodure de N,N-diméthylperhydroazépinium, du iodure de N,N-diéthylperhydroazépinium, du iodure de N,N-dipropylperhydroazépinium, du bromure de N-n-butyl-N-éthyl-perhydroazépinium ou du iodure de N-n-butyl-N-n-propyl-perhydroazépinium.

8. Composition de résine époxyde selon la revendication 1, contenant en plus un composé avec deux groupes hydroxyle phénoliques.

9. Composition de résine époxyde selon la revendication 8, contenant un bisphénol en tant que composé avec deux groupes hydroxyle phénoliques.

10. Utilisation de sels quaternaires de perhydroazépinium ou de sels quaternaires d'octahydroazocinium comme catalyseur de préallongement de chaîne pour des résines époxydes.
